# EUROPEAN PATENT APPLICATION

(11) **EP 4 286 170 A1**
(43) Date of publication of application: **06.12.2023**
(21) Application number: 21923116.4
(22) Date of filing: 29.11.2021
(51) Int. Cl.: B41M 1/28, C09D 11/08

(54) **METAL PRINTING INK COMPOSITION AND METHOD USING SAME FOR REDUCING MISTING DURING PRINTING**

(30) Priority: 26.01.2021 JP 2021010707
(71) Applicant: Sakata INX Corporation, Osaka-shi, Osaka 550-0002 (JP)
(72) Inventor: FURUYA Takayuki, Osaka-shi, Osaka 550-0002 (JP); SAITO Kota, Osaka-shi, Osaka 550-0002 (JP); ARAKI Takashi, Osaka-shi, Osaka 550-0002 (JP)
(74) Representative: V.O.
(86) International application number: PCT/JP2021/043535
(87) International publication number: WO 2022/163111

(57) **Abstract**

[Object]

To provide an ink composition for printing on metal capable of improving the suitability for a reduction in misting while maintaining practical flowability.

[Solution]

The use of a resin having a certain acid value that constitutes an ink composition in combination with the addition of alkanolamine to the ink composition can reduce the generation of misting and maintain practical flowability. In other words, an ink composition for printing on metal including a color pigment, resins and a solvent may be employed, wherein at least some of the resins has an acid value of 25 mg KOH/g or more, and the ink composition further includes an alkanolamine compound.

## Description

### TECHNICAL FIELD

The present invention relates to an ink composition for printing onto metal materials and a method for reducing misting during printing with such an ink composition.

### BACKGROUND ART

In a printing process onto the outer surfaces of metal materials, such as zinc-coated or tin-coated iron plates, aluminum plates and metal cans made of these metal materials, ink compositions for printing onto metal materials (thereafter, also referred to as "printing on metal") have been used which contain binder resins, such as alkyd resins, polyester resins and epoxy resins, and mineral oils or organic solvents, such as higher alcohols, as main vehicle ingredients.

In addition, overprint varnishes are generally coated on such printed surfaces in order to improve various properties, such as adhesiveness, flexual resistance, impact resistance and abrasion resistance, of the coated ink film. Widely used examples of such overprint varnishes are solvent-type vanishes, which are composed of binder resins, such as alkyd resins, polyester resins, acrylic resins and epoxy resins; curing agents, such as melamine resins and benzoguanamine resins; and solvents, such as mineral oils and cellosolve-based organic solvents.

In the printing process onto the outer surfaces of metal materials, after printing using ink compositions with an offset printing machine or a dry offset printing machine, overprint varnish has been applied on the ink film in a wet-on-wet manner with a coater, followed by baking at 150 to 280°C.

As described above, in the case that an ink composition is consecutively transferred between rollers rotating at a high rate in the printing on metal with an offset printing machine or a dry offset printing machine, the ink composition may scatter in the form of fine particles and thereby contaminate the interiors and surroundings of such printing machines. This phenomenon is referred to as "misting", which is believed to occur as follows: when the ink composition splits between two rotating rollers in contact with each other, the ink composition is elongated into fine filaments at the splitting point between the rollers, and some parts of the filaments are converted into fine particles due to fracturing of the filaments. Whether such misting is likely to occur is believed to mainly depend on the viscoelasticity of the ink composition. In other words, it is probable that larger elasticity of the ink composition leads to earlier fracturing of the filaments thereby causing less misting, whereas smaller elasticity of the ink composition leads to longer filaments due to delayed fracturing of the filaments thereby causing more misting.

Such viewpoints will create one idea where the elasticity of the ink composition should be raised to reduce misting. However, the raised elasticity of the ink composition causes another problem in that the viscosity of the ink composition is lowered, resulting in difficulty in achieving appropriate flowability of the ink composition. As described above, a trade-off relationship holds between the suitability for a reduction in misting and the flowability of the ink composition, and various measures have been proposed for achieving the compatibility of these characteristics (for example, see Patent Literatures 1 to 5).

### CITATION LIST

### PATENT LITERATURES

PTL1: JP H6-100814A
PTL2: JP H6-116526A
PTL3: JP H6-306321A
PTL4: JP H7-157700A
PTL5: JP H8-60061A

### BRIEF DESCRIPTION OF THE INVENTION

### PROBLEMS TO BE SOLVED

The present invention has been made in view of the above circumstances, and an object of the present invention is to provide an ink composition for printing on metal that can improve the suitability for a reduction in misting while maintaining practical flowability.

### MEANS TO SOLVE PROBLEMS

The present inventors have made intensive studies to solve the above problems, found that the use of resins having a certain acid value as an ingredient of the ink composition in combination with the addition of alkanolamine to the ink composition can reduce the generation of misting while maintaining practical flowability, and consequently completed the present invention. In detail, the present invention provides the following Aspects.

Aspect (1): The present invention provides an ink composition for printing on metal including a coloring pigment, resins, and a solvent, wherein at least some of the resins have an acid value of 25 mg KOH/g or more, and the ink composition further includes an alkanolamine compound.

Aspect (2): The present invention also provides an ink composition for printing on metal according to Aspect (1), wherein the alkanolamine compound contains two or more hydroxyl groups per molecule.

Aspect (3): The present invention also provides an ink composition for printing on metal according to Aspect (1) or (2), wherein the alkanolamine compound contains four hydroxyl groups per molecule.

Aspect (4): The present invention also provides an ink composition for printing on metal according to any one of Aspects (1) to (3), wherein the at least some of the resins are a rosin-modified resin.

Aspect (5): The present invention also provides an ink composition for printing on metal according to Aspect (4), wherein the rosin-modified resin contains a moiety derived from at least one selected from the group consisting of maleic acid, maleic anhydride, fumaric acid, and fumaric anhydride in the structure thereof.

Aspect (6): The present invention also provides a method for reducing misting during printing, comprising addition of an alkanolamine compound to an ink composition for printing on metal containing a resin having an acid value of 25 mg KOH/g or more.

Aspect (7): The present invention also provides a method according to Aspect (6), wherein the alkanolamine compound contains two or more hydroxyl groups per molecule.

Aspect (8): The present invention also provides a method according to Aspect (6) or (7), wherein the alkanolamine compound contains four hydroxyl groups per molecule.

Aspect (9): The present invention also provides a method according to any one of Aspects (6) to (8), wherein the resin is a rosin-modified resin.

Aspect (10): The present invention also provides a method according to Aspect (9), wherein the rosin-modified resin contains a moiety derived from at least one selected from the group consisting of maleic acid, maleic anhydride, fumaric acid, and fumaric anhydride in the structure thereof.

### ADVANTAGEOUS EFFECTS OF THE INVENTION

The present invention provides an ink composition for printing on metal which can improve the suitability for a reduction in misting while maintaining practical flowability.

### EMBODIMENTS OF THE INVENTION

One embodiment of an ink composition for printing on metal in the present invention (hereafter, appropriately abbreviated as "inventive ink composition") and one embodiment of a method for reducing misting during printing in the present invention will now be described. It should be noted that the present invention is not limited to the following aspects and embodiments, and can be implemented with appropriate modifications within the scope of the present invention.

### <Ink composition for printing on metal>

The inventive ink composition can be used in printing on metal, and is preferably applicable to printing through a so-called dry offset printing process with a letterpress plate as a printing plate or an offset printing process with a lithographic plate as a printing plate, that is, applicable to all printing processes which are generally employed in printing on metal. The inventive ink composition is also applicable to printing processes employed in not only a two-piece can printing but also a three-piece can printing where water-based overprint varnish (or OP varnish) is applied in a wet-on-wet manner immediately after printing with the ink composition. The inventive ink composition can not only prevent the generation of misting during printing but also have superior flowability in itself, resulting in decreases in drawbacks, such as backing-away.

The inventive ink composition includes a coloring pigment, resins, and a solvent, wherein at least some of the resins have an acid value of 25 mg KOH/g or more, and the ink composition further includes an alkanolamine compound. Each ingredient will be described below.

### [Resin]

The inventive ink composition contains a resin having an acid value of 25 mg KOH/g or more. The inventive ink composition contains a high-polarity resin having such an acid value and an alkanolamine described later, resulting in a reduction in misting during printing. Although the mechanism for such a reduction is not necessarily obvious, it is speculated that the inventive ink composition contains a resin having such a relatively high acid value and an alkanolamine, and thereby the resin with high-polarity substituents is crosslinked with hydroxyl groups contained in the alkanolamine to increase the elasticity of the ink composition as a whole, leading to satisfactory characteristics, such as a reduction in misting. In addition, an enhancement in elasticity of the ink composition generally leads to a decrease in flowability, however it is interesting that the combination of a resin having a high acid value with an alkanolamine, which causes a reduction in misting, can hold the flowability of the ink composition within a practical range where the problems, such as backing-away, do not occur.

The resin described above has an acid value of preferably 30 mg KOH/g or more, more preferably 50 mg KOH/g or more. An exemplary upper limit of the acid value of the above resin is preferably about 400 mg KOH/g, more preferably about 250 mg KOH/g, although these values are not essential.

One preferred example of the resin described above include a rosin-modified resin. A rosin-modified resin is prepared with rosin as one of raw materials. Rosin contains a mixture of resin acids, such as abietic acid, palustric acid, isopimaric acid and levopimaric acid, and these resin acids contain hydrophilic and chemically active carboxyl groups, some of which have conjugated double bonds. Accordingly, various rosin-modified resins are prepared by condensation polymerization in combination with polyhydric alcohols and polybasic acids; addition of resol, which is a phenolic condensate, to benzene rings contained in the rosin skeleton; and addition of a maleic anhydride or a maleic anhydride skeleton through Diels-Alder reaction with maleic anhydride or maleic acid as a dienophile. Various types of such rosin-modified resins are commercially available, and can be procured to be used.

Examples of rosin-modified resins include maleated rosins, fumarated rosins, rosin-modified maleic acid resins, rosin-modified fumaric acid resins, rosin-modified phenolic resins, rosin-modified alkyd resins, and rosin-modified polyester resins. In the present invention, any rosin-modified resin may be used, although a preferred resin among various rosin-modified resins contains a moiety derived from at least one selected from the group consisting of maleic acid, maleic anhydride, fumaric acid and fumaric anhydride in its structure from the viewpoint where the polarity based on the acid value of rosin-modified resin is preferably high. A resin that "contains a moiety derived from at least one selected from the group consisting of maleic acid, maleic anhydride, fumaric acid and fumaric anhydride in its structure" is prepared with at least one selected from the group consisting of maleic acid, maleic anhydride, fumaric acid and fumaric anhydride as part of raw materials. For example, such a resin indicates rosin-modified maleic resin or rosin-modified fumaric acid resin prepared through condensation polymerization of maleic acid or fumaric acid as part of polybasic acid; maleated rosin or fumarated rosin having a structure constructed by addition of maleic acid, maleic anhydride, fumaric acid, or fumaric anhydride as a dienophile through Diels-Alder reaction; or a resin prepared through further polymerization of other chemical species with functional groups contained in the above raw materials.

The resin described above is heated to be dissolved or dispersed in solvents described later, and then used in a state of varnish. In the production of the varnish, a di- or higher valent metal alkoxy compound is preferably added as a gelling agent to the resulting varnish solution or dispersion to form a gelled varnish. It is preferred that the use of gelled varnish produced from a rosin-modified resin in the preparation of an ink composition can impart appropriate viscoelasticity to the ink composition, achieve an improvement in flowability and a reduction in misting, and form a tougher cured film.

The content of the resin described above in the ink composition is preferably 5 to 50 mass%, more preferably 5 to 40 mass%, further more preferably 8 to 40 mass% to the entire composition.

The inventive ink composition may contain various resins that have been used in ink compositions for printing on metal, in addition to resins having a high acid value, such as the resin described above. Examples of such resins include polyester resins, petroleum resins, epoxy resins, ketone resins, amino resins, alkyd resins, benzoguanamine resins, and melamine resins. Among these resins, benzoguanamine resins and melamine resins are also used as curing agents in ink compositions. In addition, alkyd resins preferably include a coconut oil-modified alkyd resin.

### [Solvent]

Solvents used in the inventive ink composition include, but not limited to, known solvents used in usual ink compositions for printing on metal. Examples of such solvents include aliphatic hydrocarbons having a boiling point in a range of about 230 to 400°C, alicyclic hydrocarbons, aromatic hydrocarbons such as alkylbenzene, higher alcohols, and polyoxyethylene glycol ethers. Among these solvents, preferred solvents include polyoxyalkylene glycol ethers represented by the following general formula (1):

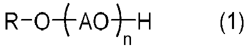

In general formula (1), each A is independently determined and is an alkylene group having 2 to 4 carbon atoms which may have a branch structure. Examples of such alkylene groups include an ethylene group [-(CH₂)₂-], a propylene group [-CH₂(CH₃)-CH₂- or -CH₂CH₂(CH₃)-], a trimethylene group [-(CH₂)₃-], and an isopropylidene group [-C(CH₃)₂-].

In general formula (1), R is an alkyl group having 1 to 13 carbon atoms which may have a branch structure and/or a ring structure. In addition, this alkyl group may be not only an aliphatic group but also an alicyclic group. Examples of such alkyl groups include methyl, ethyl, propyl, isopropyl, butyl, hexyl, 2-ethylhexyl, octyl, decyl and cyclohexyl groups.

In general formula (1), n is an integer of 2 to 6. n of 2 or more can keep a sufficient boiling point for stabilizing the ink composition on a printing machine, which value is preferred. n of 6 or less can have a suitable viscosity as a solvent in the ink composition.

Examples of the polyoxyethylene glycol ethers represented by general formula (1) include dipropylene glycol monomethyl ether, dipropylene glycol monobutyl ether, dipropylene glycol monooctyl ether, dipropylene glycol tridecyl ether, tripropylene glycol monobutyl ether, tripropylene glycol monodecyl ether, tetrapropylene glycol monohexyl ether, pentapropylene glycol monobutyl ether, and hexapropylene glycol monomethyl ether.

The content of the solvent in the ink composition depends on the desired viscosity for the ink composition. In other words, the content of the solvent may be determined such that the ink composition has a desired viscosity. The ink composition may have a viscosity of 10 to 70 Pa·s measured with a Laray viscometer at 25°C, although such a value is not essential.

### [Alkanolamine compound]

The inventive ink composition contains an alkanolamine compound. Alkanolamine indicates a compound having an amino group and a hydroxyl group in an alkylene skeleton. In the present invention, such alkanolamine compounds include preferably a compound where a hydroxyalkylene group is bonded to a tertiary amino group, more preferably a compound where multiple hydroxyalkylene groups are bonded to a tertiary amino group. Examples of such alkanolamine compounds include those represented by the following general formula (2).

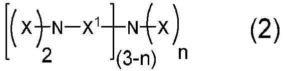

In general formula (2), each X is independently an alkyl or hydroxyalkyl group which may have a branch structure, each X¹ is independently an alkylene group which may have a branch structure, and n is an integer of 0 to 3. Examples of such compounds include those represented by the following chemical formulae (2-1) to (2-4).

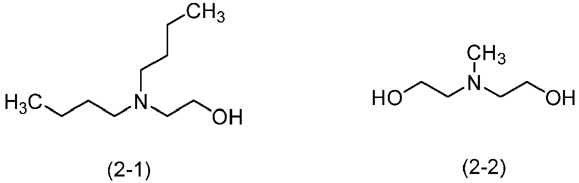

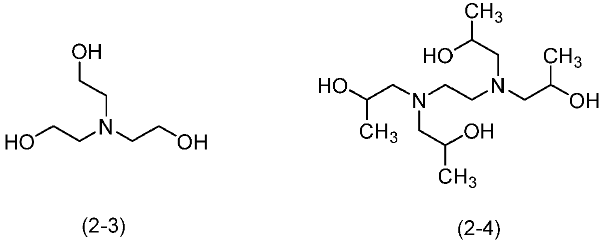

In the inventive ink composition, an increase in the number of hydroxyl groups contained in the alkanolamine compound tends to enhance the effect of reducing misting during printing. Based on this tendency, the alkanolamine compound is preferably a compound containing two or more hydroxyl groups as represented by the chemical formulae (2-2) to (2-4), more preferably a compound containing four or more hydroxyl groups as represented by the chemical formula (2-4).

The content of the alkanolamine compound is preferably 0.1 mass% to 20 mass%, more preferably 1 mass% to 12 mass%, further more preferably 3 mass% to 10 mass% to the entire ink composition.

### [Coloring pigment]

Coloring pigments are ingredients for imparting coloring power to the ink composition. The coloring pigments include, but not limited to, organic and/or inorganic pigments commonly employed in ink compositions for printing on metal.

Examples of such coloring pigments include yellow pigments, such as Disazo Yellows (Pigment Yellow 12, Pigment Yellow 13, Pigment Yellow 17 and Pigment Yellow 1) and Hansa Yellow; magenta pigments, such as Brilliant Carmine 6B, Lake Red C, and Watching Red; cyan pigments, such as phthalocyanine blue, phthalocyanine green and alkali blue; black pigments, such as carbon black; and fluorescent pigments. In the present invention, the coloring pigments also include metal powder pigments for imparting metal colors, such as gold and silver, to ink compositions. Examples of such metal powder pigments include gold powder, bronze powder, aluminum paste which aluminum powder is processed into a paste, and mica powder.

The coloring pigments are contained in an amount of, for example, about 5 to 50 mass% to the entire ink composition, although such an amount is not essential. In the case that yellow pigments, magenta pigments, cyan pigments, and black pigments are used to prepare yellow ink compositions, magenta ink compositions, cyan ink compositions, and black ink compositions, respectively, pigments of other colors may be used together or ink compositions of other colors may be added as complementary color ingredients.

### [Other ingredients]

In the inventive ink composition, other ingredients, such as known curing agents, pigment dispersants, waxes and stabilizers, may be added as needed.

Curing agents may be used such as amino resins, for example, melamine resins and benzoguanamine resins.

The inventive ink composition may be prepared by mixing each ingredient, such as a coloring pigment, a resin, and a solvent, with a roll mill, a ball mill, or a bead mill in a conventional process. As already described, the ink composition has a viscosity of 10 to 70 Pa·s measured with a Laray viscometer at 25°C, although such a value is not essential.

Examples of metals targeted in printing with the inventive ink compositions include, but not limited to, zinc-coated or tin-coated iron plates, aluminum plates, or metal cans made of these metal materials.

Vanishes commonly used can be employed as a water-based OP varnish to be applied onto the printed surfaces with ink compositions. In detail, the water-based OP varnish may be prepared in combination with water-based acrylic resins, water-based polyester resins, water-based alkyd resins, water-based epoxy resins, or two or more of these modified resins as binder resins, and amino resins as curing agents.

The printing on the surfaces of metal materials with the ink composition and water-based OP varnish may be performed according to the following steps: the inventive ink composition is initially printed with a dry offset printing machine or an offset printing machine; and the water-based OP varnish is then overcoated on the undried surface of the ink composition with a coater, followed by baking at 150 to 280°C for several seconds to several minutes.

### <Method for reducing misting during printing>

A method for reducing misting during printing according to the present invention will now be described. This method is characterized by addition of an alkanolamine compound to an ink composition for printing on metal containing a resin having an acid value of 25 mg KOH/g or more. In other words, an object of the method according to the present invention is to prevent misting during printing by the use of the same composition as the inventive ink composition described above as an ink composition for printing on metal.

In the method according to the present invention, an alkanolamine compound to be added preferably contains two or more hydroxyl groups per molecule, more preferably four or more hydroxyl groups per molecule, which is as already described.

In the method according to the present invention, the resin described above is preferably a rosin-modified resin, and the rosin-modified resin more preferably has a moiety derived from at least one selected from the group consisting of maleic acid, maleic anhydride, fumaric acid, and fumaric anhydride in the structure thereof, which is as already described.

Since an ink composition used in the method according to the present invention is identical to the inventive ink composition described above, the detailed description for the ink composition is omitted herein.

### EXAMPLES

The inventive ink composition will be described in more detail along with the illustration of examples, although the present invention is not limited to the following examples.

### [Preparation of Vanish 1]

A mixture of neopentyl glycol (17.4 parts by mass), pentaerythritol (23.0 parts by mass), coconut oil fatty acid (22.2 parts by mass), isophthalic acid (36.8 parts by mass) and terephthalic acid (7.01 parts by mass) were heated at 230°C in a nitrogen atmosphere for the first stage of esterification, and trimellitic anhydride (4.7 parts by mass) was then added and heated at 155°C in a nitrogen atmosphere for the second stage of esterification. These reactions of esterification were carried out in accordance with a conventional process to yield Alkyd resin A having an acid value of 34.0 mg KOH/g, an oil length of 23.5, a weight average molecular weight of 6,720 and a number average molecular weight of 1,270. Alkyd resin A (51.7 parts by mass) was dissolved in tripropylene glycol monobutyl ether (48.2 parts by mass) to yield Varnish 1. Varnish 1 is a varnish of coconut oil-modified alkyd resin having an acid value of 34.0 mg KOH/g.

### [Preparation of Varnish 2]

A mixture of maleated rosin resin having an acid value of 205.5 mg KOH/g, a weight average molecular weight of 536, a number average molecular weight of 312 and a softening point of 108°C or less (56.7 parts by mass) and tripropylene glycol monobutyl ether (40.5 parts by mass) was heated with stirring at 130°C for one hour to dissolve the mixture, and aluminum ethyl acetoacetate diisopropylate (ALCH; 1.3 parts by mass) was then added, followed by heating with stirring at 130°C for 40 minutes for gelation to yield Vanish 2. Varnish 2 is a gelled varnish of maleated rosin resin having an acid value of 205.5 mg KOH/g.

### [Preparation of Varnish 3]

A mixture of neopentyl glycol (16.7 parts by mass), pentaerythritol (22.2 parts by mass), coconut oil fatty acid (34.7 parts by mass), isophthalic acid (30.4 parts by mass) and terephthalic acid (6.8 parts by mass) was heated at 230°C for esterification. This esterification reaction was carried out in accordance with a conventional process to yield Alkyd resin B having an acid value of 10.6 mg KOH/g, an oil length of 36.7, a weight average molecular weight of 9,204, and a number average molecular weight of 1,299. Alkyd resin B (51.7 parts by mass) was dissolved in tripropylene glycol monobutyl ether (48.2 parts by mass) to yield Varnish 3. Varnish 3 is a varnish of coconut oil-modified alkyd resin having an acid value of 10.6 mg KOH/g.

### [Examples 1 to 17 and Comparative Examples 1 to 5]

Ink compositions of Examples 1 to 17 and Comparative Examples 1 to 5 were prepared in accordance with the formulations shown in Tables 1 to 3. In the preparation of the ink compositions, all the ingredients were mixed and then kneaded in a roll mill heated to 40°C. Each amount of the formulations shown in Tables 1 to 3 is based on parts by mass. In Tables 1 to 3, "Coloring pigment" is Phthalocyanine Blue 15:3, "Curing agent" is a highly methylated melamine resin (available from Allnex GMBH, Cymel 303LF), "Solvent" is tripropylene glycol monobutyl ether, "Alkanolamine 4" is an alkanolamine having four hydroxyl groups represented by the chemical formula (2-4) (Quadrol^{™}, N,N,N',N'-Tetrakis(2-hydroxypropyl)ethylenediamine), "Alkanolamine 3" is an alkanolamine having three hydroxyl groups represented by the chemical formula (2-3) (triethanolamine), "Alkanolamine 2" is an alkanolamine having two hydroxyl groups represented by the chemical formula (2-2) (N-methyldiethanolamine), and "Alkanolamine 1" is an alkanolamine having one hydroxyl group represented by the chemical formula (2-1) (2-(dibutylamino)ethanol).

### [Evaluation of flowability]

For each of the ink compositions in Examples and Comparative Examples, the flow value was measured with a spread meter, and the flowability was evaluated using the flow slope value. The flow slope value is given by subtracting the spread diameter in mm measured after 10 seconds from the spread diameter in mm measured after 100 seconds with the spread meter, and a larger flow slope value indicates higher flowability. The flow slope values calculated are shown in the column "Flow slope value" of Tables 1 to 3.

### [Evaluation of misting resistance]

For each of the ink compositions in Examples and Comparative Examples, 2.6 cc of the ink composition was applied onto rotating rollers in an inkometer, evenly smoothed, and then rotated at 1,200 rpm for one minute. During the rotation, a blank sheet of paper was placed beneath the rollers to measure the degree of misting thereon. The measurement was carried out while holding the rollers at 30°C. The change in mass of the blank sheet was measured before and after the measurement, which change was defined as the amount of misting (mg). Since a larger change in mass of the blank paper before and after the measurement reflects a larger amount of scattering of the ink composition, a smaller amount leads to better results. The amounts of misting (mg) calculated are shown in the column "Amount of misting" of Tables 1 to 3.

### [Pencil hardness]

For each of the ink compositions in Examples and Comparative Examples, 0.1 cc of the ink composition was spread on an aluminum strip with an RI tester (manufactured by Akira Seisakusho Co., Ltd.) having four-split roll, and the resulting spread strips were heated in an electric oven at 200°C for two minutes. The spread strips were then cooled to room temperature, and the pencil hardness on surfaces of the spread strips was measured in accordance with JIS K5600. The results are shown in the column "Pencil hardness" of Tables 1 to 3.

**[Table 1]**

| | Examples | | | | | | | | | |
|---|---|---|---|---|---|---|---|---|---|---|
| | 1 | 2 | 3 | 4 | 5 | 6 | 7 | 8 | 9 | 10 |
| Vanish 1 | 38.4 | 38.4 | 38.4 | 38.4 | 38.4 | 38.4 | 38.4 | 38.4 | 38.4 | 38.4 |
| Vanish 2 | 20.0 | 20.0 | 20.0 | 20.0 | 20.0 | 20.0 | 20.0 | 20.0 | 20.0 | 20.0 |
| Curing agent | 14.2 | 14.2 | 14.2 | 14.2 | 14.2 | 14.2 | 14.2 | 14.2 | 14.2 | 14.2 |
| Coloring pigment | 28.0 | 28.0 | 28.0 | 28.0 | 28.0 | 28.0 | 28.0 | 28.0 | 28.0 | 28.0 |
| Solvent | 2.5 | 5.0 | 6.0 | 6.5 | 7.0 | 1.0 | | | | |
| Alkanolamine 4 | 2.0 | 3.9 | 7.8 | 9.8 | 11.7 | | | | | |
| Alkanolamine 3 | | | | | | 2.0 | 4.0 | 8.0 | 10.0 | 11.9 |
| Total | 105.1 | 109.5 | 114.4 | 116.9 | 119.3 | 103.6 | 104.6 | 108.6 | 110.6 | 112.5 |
| Flow slope value | 5.0 | 6.2 | 4.8 | 4.6 | 4.9 | 6.1 | 5.4 | 6.3 | 4.1 | 3.8 |
| Amount of misting | 6.4 | 2.1 | 0.0 | 1.2 | 2.7 | 4.0 | 0.0 | 1.0 | 5.5 | 16.3 |
| Pencil hardness | 2H-3H | 2H | 2H | 2H | 2H | 2H-3H | 2H | 2H | 2H-3H | 2H-3H |

**[Table 2]**

| | Examples | | | | | | | Comparative Examples |
|---|---|---|---|---|---|---|---|---|
| | 11 | 12 | 13 | 14 | 15 | 16 | 17 | 1 |
| Vanish 1 | 38.4 | 38.4 | 38.4 | 38.4 | 38.4 | 38.4 | 38.4 | 38.4 |
| Vanish 2 | 20.0 | 20.0 | 20.0 | 20.0 | 20.0 | 20.0 | 20.0 | 20.0 |
| Curing agent | 14.2 | 14.2 | 14.2 | 14.2 | 14.2 | 14.2 | 14.2 | 14.2 |
| Coloring pigment | 28.0 | 28.0 | 28.0 | 28.0 | 28.0 | 28.0 | 28.0 | 28.0 |
| Solvent | | 2.0 | | | | | | |
| Alkanolamine 2 | 1.8 | 3.2 | 6.4 | 8.0 | 9.6 | | | |
| Alkanolamine 1 | | | | | | 2.3 | 4.6 | |
| Total | 102.4 | 105.8 | 107.0 | 108.6 | 110.2 | 102.9 | 105.2 | 100.6 |
| Flow slope value | 6.1 | 4.4 | 4.0 | 3.3 | 3.0 | 5.8 | 4.7 | 6.8 |
| Amount of misting | 7.7 | 3.2 | 5.5 | 13.8 | 25.3 | 38.9 | 37.1 | 68.5 |
| Pencil hardness | 2H-3H | 2H | 2H-3H | 2H-3H | 2H | 2H-3H | 2H-3H | 2H |

**[Table 3]**

| | Comparative Examples | | | |
|---|---|---|---|---|
| | 2 | 3 | 4 | 5 |
| Vanish 1 | | | | |
| Vanish 3 | 58.4 | 58.4 | 58.4 | 58.4 |
| Curing agent | 14.2 | 14.2 | 14.2 | 14.2 |
| Coloring pigment | 28.0 | 28.0 | 28.0 | 28.0 |
| Solvent | | | | 1.0 |
| Alkanolamine 3 | | 0.7 | 1.4 | 4.0 |
| Total | 100.6 | 101.3 | 102.0 | 105.6 |
| Flow slope value | 0.2 | 0.2 | 0.5 | 0.2 |
| Amount of misting | 239.5 | 261.6 | 212.1 | 254.9 |
| Pencil hardness | H | H | H | H |

Tables 1 and 2 demonstrate that Examples 1 to 17 containing an alkanolamine exhibit reduced amounts of misting in comparison with alkanolamine-free Comparative Example 1. In addition, each of the ink compositions of Examples 1 to 17 has a flow slope value of 3.0 or more indicating practical flowability, which does not cause backing-away during printing. Furthermore, two or more hydroxyl groups contained in the alkanolamine can significantly reduce the amount of misting, and such a reduction is more pronounced in Examples 1 to 5 where four hydroxyl groups are contained in the alkanolamine. In addition, the comparison of Comparative Example 2 with Comparative Examples 3 to 5 in Table 3 demonstrates that the ink composition containing a resin having an acid value of less than 25 mg KOH/g cannot achieve the effect of reducing the amount of misting even with the addition of the alkanolamine compound.

## Claims

1. An ink composition for printing on metal comprising a coloring pigment, resins, and a solvent, wherein at least some of the resins have an acid value of 25 mg KOH/g or more, and the ink composition further includes an alkanolamine compound.

2. The ink composition for printing on metal according to claim 1, wherein the alkanolamine compound contains two or more hydroxyl groups per molecule.

3. The ink composition for printing on metal according to claim 1 or 2, wherein the alkanolamine compound contains four hydroxyl groups per molecule.

4. The ink composition for printing on metal according to any one of claims 1 to 3, wherein the at least some of the resins are a rosin-modified resin.

5. The ink composition for printing on metal according to claim 4, wherein the rosin-modified resin contains a moiety derived from at least one selected from the group consisting of maleic acid, maleic anhydride, fumaric acid, and fumaric anhydride in the structure thereof.

6. A method for reducing misting during printing, comprising addition of an alkanolamine compound to an ink composition for printing on metal containing a resin having an acid value of 25 mg KOH/g or more.

7. The method according to claim 6, wherein the alkanolamine compound contains two or more hydroxyl groups per molecule.

8. The method according to claim 6 or 7, wherein the alkanolamine compound contains four hydroxyl groups per molecule.

9. The method according to any one of claims 6 to 8, wherein the resin is a rosin-modified resin.

10. The method according to claim 9, wherein the rosin-modified resin contains a moiety derived from at least one selected from the group consisting of maleic acid, maleic anhydride, fumaric acid, and fumaric anhydride in the structure thereof.
